# FASCICULE DE BREVET EUROPEEN

(11) **EP 0 685 145 B1**
(45) Date de publication et mention de la délivrance du brevet: **10.02.1999**
(21) Numéro de dépôt: 95401251.4
(22) Date de dépôt: 30.05.1995
(51) Int. Cl.: A01D 33/10

(54) **Dispositif de ramassage et nettoyage de pommes de terre**
Vorrichtung zum Säubern und Ernten von Kartoffeln
Potato harvester and cleaner

(30) Priorité: 31.05.1994 FR 9406611
(43) Date de publication de la demande: 06.12.1995
(73) Titulaire: ETABLISSEMENTS JEAN MOREAU, 59159 Marcoing (FR)
(72) Inventeur: Jette, Etienne, F-59159 Marcoing (FR)
(74) Mandataire: Colas, Jean-Pierre

(56) Documents cités:
- EP-A- 0 335 853
- CH-A- 329 637
- FR-A- 1 162 833
- GB-A- 840 962

## Description

La présente invention est relative à un dispositif de ramassage et nettoyage de pommes de terre. Ces pommes de terre peuvent avoir été arrachées au préalable et rassemblées en andains sur le sol, ou bien arrachées immédiatement avant leur ramassage, à l'aide d'outils solidaires du dispositif lui-même.

Le ramassage et le nettoyage des pommes de terre posent divers problèmes :
- la pomme de terre étant un objet fragile, il convient de lui éviter au maximum les secousses et chocs qui seraient susceptibles de l'endommager, même superficiellement,
- il est cependant nécessaire de séparer au maximum la pomme de terre de la terre qui l'entoure et peut adhérer sur elle,

Les chocs et secousses auxquelles sont soumises les pommes de terre peuvent se produire en plusieurs points de son trajet : lors de l'arrachage ou du ramassage, au cas où les outils d'arrachage et/ou de ramassage sont trop hauts par rapport à la surface du sol, et lors des déversements qui sont nécessaires entre les différentes parties des moyens pour transporter les pommes de terre vers un véhicule qui les évacue.

Les causes possibles d'une quantité excessive de terre accompagnant les pommes de terre peuvent être des outils d'arrachage et/ou de ramassage s'enfonçant trop profondément dans le sol, et une séparation inefficace le long du trajet vers le véhicule.

Le document EP-A-0.335.853 décrit une machine de ramassage particulièrement destinée aux betteraves, mais dont le principe pourrait être appliqué aux pommes de terre. Cette machine comprend un châssis auxiliaire qui porte une bande transporteuse dont l'extrémité avant agit comme un outil de ramassage. Le châssis auxiliaire est articulé à la machine en un point situé à sa partie arrière, et à proximité de l'extrémité arrière de la bande transporteuse. La partie avant du châssis auxiliaire peut être réglée en hauteur à l'aide de vérins. Les betteraves transportées par la bande transporteuse tombent dans un bac, où elles sont reprises par un élévateur, qui les entraîne vers une benne basculante.

Cette machine permet de régler au mieux la hauteur des moyens de ramassage, et donc de limiter l'endommagement des pommes de terre par des outils placés trop haut, et d'éviter un excès de terre résultant d'outils placés trop bas. La bande transporteuse assure une élimination relativement efficace de la terre, mais on n'est pratiquement pas maître de l'inclinaison de cette bande, et donc du degré de nettoyage. La raison est que la hauteur de l'extrémité avant de la bande transporteuse est dépendante de la position désirée pour les moyens de ramassage, alors que la hauteur de son extrémité arrière est pratiquement fixe, car elle est sensiblement liée à la position du point d'articulation du châssis auxiliaire. Si les circonstances font que la pente est trop élevée, les pommes de terre roulent trop longtemps sur elles-mêmes et sont détériorées. Si la pente est trop faible, la machine ne procure pas une élimination suffisante de la terre entraînée.

La présente invention a pour but de fournir un dispositif qui comprend sensiblement les mêmes éléments que celui qu'on vient de décrire, mais dans lequel l'inclinaison de la bande transporteuse peut être réglée en fonction des circonstances, ceci étant obtenu de façon simple et peu coûteuse.

Pour obtenir ce résultat, l'invention fournit un dispositif de ramassage et nettoyage de pommes de terre, comportant un châssis principal porté par des roues, et qui peut être muni d'outils d'arrachage à l'avant, un ensemble comportant au moins un tapis transporteur et apte à transporter les pommes de terre, en les nettoyant, depuis un point de ramassage situé à l'avant et à faible distance du sol, jusqu'à un point de déversement situé à l'arrière et à une plus grande distance du sol, un châssis auxiliaire qui peut pivoter autour d'un axe transversal horizontal lié au châssis principal, et qui supporte au moins une partie de l'ensemble à tapis transporteurs, partie qui comprend le point de déversement, et un élévateur destiné à recevoir des pommes de terre du point de déversement pour les envoyer dans une trémie ou dans un véhicule de collecte,
caractérisé en ce que, l'axe transversal horizontal de pivotement du châssis auxiliaire est situé à proximité de l'avant de l'ensemble à tapis transporteurs,
en ce que des moyens sont prévus pour déplacer vers le haut ou vers le bas l'élévateur lorsque le point de déversement s'élève ou s'abaisse en conséquence d'un pivotement du châssis auxiliaire,
et en ce que des moyens sont prévus pour limiter une variation d'orientation de l'élévateur par rapport à la verticale lors de ce mouvement vers le haut ou vers le bas.

Grâce à la disposition selon l'invention, il est possible de régler l'inclinaison par rapport à la horizontale d'au moins un tapis transporteur, si bien que les pommes de terre peuvent rester plus ou moins longtemps sur ce tapis, en roulant sur elles-mêmes, jusqu'à un nettoyage complet, tout en évitant un séjour trop long qui risquerait de les endommager.

Une conséquence évidente de la disposition selon l'invention est que la hauteur du point de déversement situé à l'extrémité arrière du tapis transporteur varie en fonction de l'inclinaison de celui-ci. Un dispositif élévateur fixe, c'est-à-dire lié au châssis principal, ne serait pas satisfaisant, car il imposerait une chute trop importante aux pommes de terre lorsque le point de déversement est dans la position la plus élevée.

On aurait pu penser à fixer simplement l'élévateur sur le châssis auxiliaire. Cette solution n'est malheureusement pas acceptable. En effet, le pivotement du châssis auxiliaire conduit à incliner vers l'avant ou vers l'arrière l'élévateur d'une façon exagérée. Si l'élévateur est, par exemple, une chaîne à godets opérant dans un plan vertical transversal, une inclinaison vers l'avant ou vers l'arrière va faire que les pommes de terre vont se rassembler sur le côté avant ou sur le côté arrière de l'élévateur, d'où un mauvais fonctionnement. Si l'élévateur est une chaîne à godets opérant dans un plan vertical longitudinal,la proportion de pommes de terre retombant à chaque passage d'un godet va varier de façon trop importante selon l'inclinaison vers l'avant ou vers l'arrière du dispositif élévateur.

Divers moyens peuvent être envisagés pour limiter des variations d'orientation de l'élévateur. Par exemple, on peut penser à faire supporter l'élévateur par des vérins qui seront couplés à d'autres vérins commandant la position du châssis auxiliaire.

Selon une réalisation plus simple, l'élévateur est relié au châssis auxiliaire par une articulation à axe transversal horizontal située au voisinage du point de déversement, et au châssis principal par une bielle reliée au châssis principal et à l'élévateur par des articulations à axe transversal horizontal.

Pour être géométriquement rigoureuse, la construction devrait prévoir que le châssis principal, le châssis auxiliaire, l'élévateur et la bielle constituent un parallélogramme articulé. Cependant, il est possible de s'écarter assez sensiblement de cette configuration : si la bielle est de longueur suffisante, et à peu près parallèle, dans sa position moyenne, à la position moyenne du plan contenant les articulations du châssis auxiliaire avec le châssis principal d'une part et avec l'élévateur d'autre part, on obtient des résultats tout à fait satisfaisants. En effet, les variations d'inclinaison sur la verticale du châssis auxiliaire sont d'importance limitée, par exemple 8°. Par exemple si la bielle a une longueur égale à peu près à la moitié de la distance entre les articulations du châssis auxiliaire au châssis principal et à l'élévateur, l'inclinaison de l'élévateur vers l'avant ou vers l'arrière variera au maximum de 4°, ce qui est parfaitement acceptable.

L'invention va maintenant être décrite à l'aide d'un exemple pratique, illustré à l'aide des dessins parmi lesquels :
La figure 1 qui est une vue schématique en élévation d'un dispositif conforme à l'invention.
La figure 2 est une vue schématique, de l'arrière, du même dispositif.
La figure 3 est un schéma théorique illustrant les moyens de maintien de l'orientation de l'élévateur.

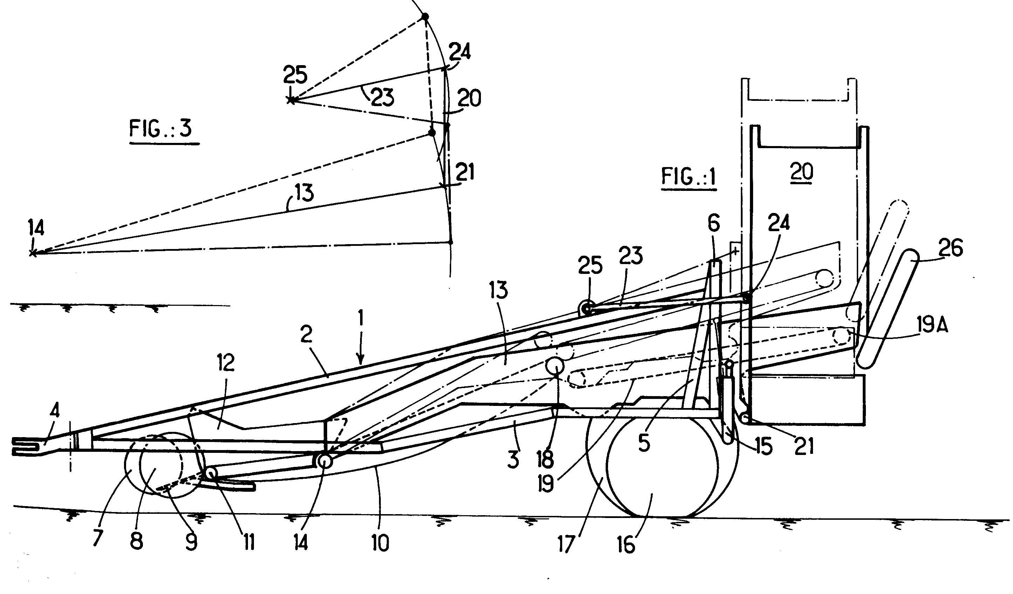

Le dispositif décrit comprend un châssis principal 1 comportant notamment deux longerons supérieurs 2 et deux longerons inférieurs 3. Ces deux longerons se rejoignent à l'avant, c'est-à-dire à gauche sur la figure 1, pour porter un timon 4. A l'arrière, des montants verticaux 5, 6 relient les longerons 2, 3. En arrière du timon 4, le châssis principal porte une pièce de guidage 7, en forme de diabolo à axe horizontal transversal, qui est destiné à rouler sur la butte du sol qui contient les pommes de terre. De chaque côté de la pièce de guidage 7 sont prévus des disques 8, destinés à pénétrer dans le sol de part et d'autre de la rangée de pommes de terre, et une bêche d'arrachage 9, destinée à soulever la terre en même temps que les pommes de terre qu'elle contient, cette bêche constitue le principal outil d'arrachage. Des moyens, non représentés, permettent de régler la position verticale des disques 8 et/ou la bêche 9.

La bêche 9 soulève le mélange de terre et de pommes de terre pendant que le dispositif avance, et déverse ce mélange sur un premier tapis transporteur 10, qui passe autour d'un rouleau de renvoi 11, d'axe horizontal-transversal situé immédiatement en arrière de la bêche 9. Le rouleau de renvoi 11 est monté sur le châssis principal, par l'intermédiaire d'une pièce de support 12, qui peut être rigide ou comporter des moyens de réglage en hauteur, non représentés.

Un châssis auxiliaire 13 est relié, à sa partie avant, au châssis principal 1 par l'intermédiaire d'une articulation 14 à axe horizontal-transversal.

Un vérin 15, à peu près vertical est articulé entre le longeron inférieur 3 du châssis principal, et la partie arrière du châssis auxiliaire. Le vérin 15 est situé en arrière des roues 16, 17 qui portent le châssis principal. Le vérin 15 peut faire pivoter le châssis auxiliaire 13 d'un angle d'environ 8° autour de l'axe de l'articulation 14.

Le châssis auxiliaire 13 porte le tambour d'entraînement 18 du premier tapis transporteur 10. Ce tapis transporteur déverse les pommes de terre, ainsi que la terre qui ne s'est pas échappée, sur un deuxième tapis transporteur 19, également porté par le châssis auxiliaire 13, et qui transporte les pommes de terre vers l'arrière, jusqu'à un point de déversement 19A.

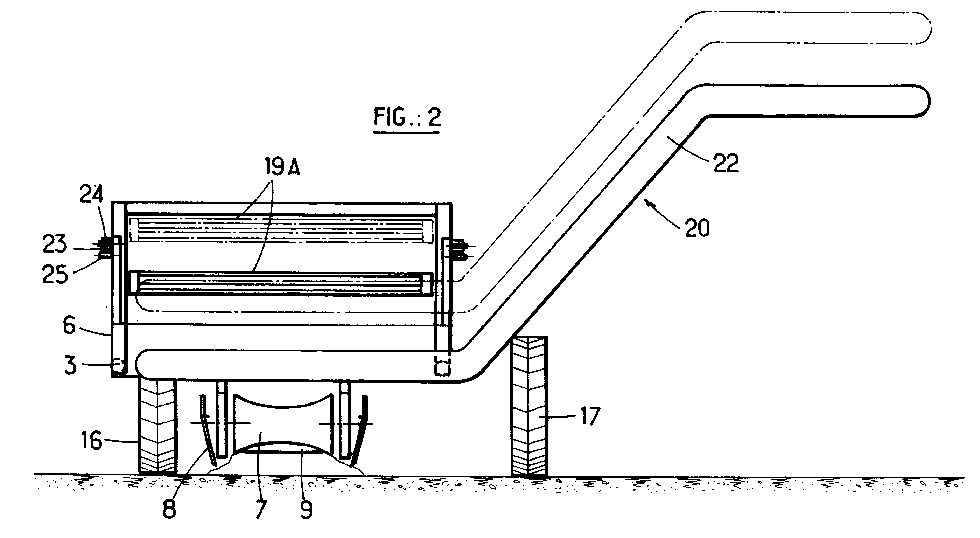

Un dispositif élévateur 20, dont la configuration est mieux visible à la figure 2, est porté par le châssis auxiliaire 13, par l'intermédiaire d'une articulation à axe horizontal-transversal 21, située à l'extrémité arrière dudit châssis auxiliaire. L'élévateur 20 comporte une chaîne à godets 22, qui se déplace dans un plan vertical perpendiculaire au sens du déplacement du dispositif. L'élévateur 20 est maintenu par une bielle 23, à laquelle il est relié par une articulation 24, à axe horizontal-transversal. La bielle 23 est d'autre part reliée au longeron supérieur 2 du châssis principal par une articulation 25, parallèle à l'articulation 24. La bielle 23 est orientée à peu près horizontalement, et sa longueur est un peu moins de la moitié de la distance entre les articulations 14 et 21 portées par le châssis auxiliaire. L'articulation 25 est placée de telle sorte que, lorsque le châssis auxiliaire pivote d'environ 8° autour de l'articulation 14, l'élévateur 20 s'incline vers l'avant ou vers l'arrière de moins de 5° par rapport à la verticale, ce qui peut être accepté sans perturber effectivement son fonctionnement.

La figure 3 illustre ce qu'on vient de dire. Sur cette figure, les angles ont été fortement exagérés dans un but de clarté. Cela permet de constater que, pour une disposition convenable de la bielle 23 et de ses articulations 24, 25, les variations d'orientation de l'élévateur 20 seront très faibles même pour de fortes variations de l'inclinaison du châssis auxiliaire 13.

Si on désirait que l'orientation de l'élévateur soit rigoureusement constante, il faudrait que les articulations 14, 21, 24 et 25 soient les sommets d'un parallélogramme. Dans l'exemple décrit, ces articulations sont directement montées sur les poutres et montants du châssis et de l'élévateur, ce qui simplifie la construction de l'ensemble sans inconvénient gênant pour le fonctionnement de l'élévateur.

La référence 26 désigne un dispositif d'extraction de la végétation entraînée avec la terre et les pommes de terre lors de l'arrachage. Il s'agit d'un tapis pourvu de saillants souples, capables d'entraîner la végétation sans entraîner également les pommes de terre et la terre. Ce dispositif est lié à l'élévateur. Son fonctionnement n'est pas altéré par les variations d'inclinaison de l'élévateur vers l'avant ou l'arrière.

## Revendications

1. Dispositif de ramassage et nettoyage de pommes de terre, comportant un châssis principal (1) porté par des roues (16, 17), et qui peut être muni d'outils d'arrachage (8, 9) à l'avant, un ensemble comportant au moins un tapis transporteur (10, 19) et apte à transporter les pommes de terre, en les nettoyant, depuis un point de ramassage situé à l'avant et à faible distance du sol, jusqu'à un point de déversement (19A) situé à l'arrière et à une plus grande distance du sol, un châssis auxiliaire (13) qui peut pivoter autour d'un axe transversal horizontal (14) lié au châssis principal, et qui supporte au moins une partie de l'ensemble à tapis transporteurs (10, 19), partie qui comprend le point de déversement (19A), et un élévateur (20) destiné à recevoir des pommes de terre du point de déversement pour les envoyer dans une trémie ou dans un véhicule de collecte,
caractérisé en ce que, l'axe transversal horizontal de pivotement du châssis auxiliaire est situé à proximité de l'avant de l'ensemble à tapis transporteurs,
en ce que des moyens sont prévus pour déplacer vers le haut ou vers le bas l'élévateur (20) lorsque le point de déversement s'élève ou s'abaisse en conséquence d'un pivotement du châssis auxiliaire,
et en ce que des moyens sont prévus pour limiter une variation d'orientation de l'élévateur (20) par rapport à la verticale lors de ce mouvement vers le haut ou vers le bas.

2. Dispositif selon la revendication 1, caractérisé en ce que l'élévateur est relié au châssis auxiliaire (13) par une articulation (21) à axe transversal horizontal située au voisinage du point de déversement, et au châssis principal par une bielle (23) reliée au châssis principal et à l'élévateur par des articulations (24, 25) à axe transversal horizontal.

3. Dispositif selon la revendication 2, caractérisé en ce que l'inclinaison moyenne de la bielle (23) est à peu près égale à l'inclinaison moyenne d'un plan passant par les articulations (14, 21) liant le châssis auxiliaire au châssis principal et à l'élévateur.

4. Dispositif selon la revendication 2 ou 3, caractérisé en ce que les articulations (14, 21, 24, 25) reliant le châssis principal, le châssis auxiliaire, l'élévateur et la bielle sont toutes montées directement sur des poutres ou des montants d'un châssis ou de l'élévateur.

## Claims

1. A device for harvesting and cleaning potatoes including a main chassis (1) carried by wheels (16, 17) and which can be fitted with digging tools (8,9) at the front, an assembly including at least one conveyor belt (10, 19) and adapted to convey the potatoes, simultaneously cleaning them, from a harvesting point at the front and at a small distance from the ground to a tipping point (19A) at the rear and at a greater distance from the ground, an auxiliary chassis (13) which can pivot about a horizontal transverse axis (14) on the main chassis and which supports at least that part of the conveyor belt assembly (10, 19) which includes the tipping point (19A), and a lifting device (20) adapted to receive potatoes from the tipping point to feed them into a hopper or a collecting vehicle,
characterised in that the horizontal transverse pivot axis of the auxiliary chassis is near the front of the conveyor belt assembly,
in that means are provided for moving the lifting device (20) upwards or downwards when the tipping point is raised or lowered as a consequence of pivoting of the auxiliary chassis, and
in that means are provided for limiting variation of the orientation of the lifting device (20) to the vertical during this upward or downward movement.

2. A device according to claim 1 characterised in that the lifting device is connected to the auxiliary chassis (13) by an articulation (21) with a horizontal transverse axis near the tipping point and to the main chassis by a link (23) connected to the main chassis and to the lifting device by articulations (24, 25) with horizontal transverse axes.

3. A device according to claim 2 characterised in that the average inclination of the link (23) is more or less equal to the average inclination of a plane passing through the articulations (14, 21) between the auxiliary chassis and the main chassis and between the auxiliary chassis and the lifting device.

4. A device according to claim 2 or claim 3 characterised in that the articulations (14, 21, 24, 25) connecting the main chassis, the auxiliary chassis, the lifting device and the link are all mounted directly on beams or uprights of a chassis or of the lifting device.

## Patentansprüche

1. Vorrichtung zum Sammeln und Reinigen von Kartoffeln, die folgendes aufweist: einen von Rädern (16, 17) getragenen Hauptrahmen (1), der in seinem vorderen Bereich mit Rodewerkzeugen (8, 9) ausgerüstet sein kann, eine Einheit mit mindestens einem Förderband (10, 19), die die Kartoffeln, indem sie sie reinigt, von einer im vorderen Bereich und in einem geringen Abstand vom Boden gelegenen Sammelstelle zu einer im hinteren Bereich und in einem größeren Abstand vom Boden gelegenen Schüttstelle (19A) befördern kann, einen Hilfsrahmen (13), der sich um eine mit dem Hauptrahmen verbundene horizontale Querachse (14) verschwenken kann und mindestens einen Teil der Förderbandeinheit (10, 19) trägt, welcher die Schüttstelle (19A) umfaßt, und eine Hebevorrichtung (20), die dazu bestimmt ist, die Kartoffeln von der Schüttstelle aufzunehmen, um sie in einen Behälter oder in ein Sammelfahrzeug zu befördern,
dadurch gekennzeichnet,
daß die horizontale Querschwenkachse des Hilfsrahmens in Nähe des vorderen Bereichs der Förderbandeinheit gelegen ist,
daß Einrichtungen vorgesehen sind, um die Hebevorrichtung (20) nach oben oder nach unten zu bewegen, wenn sich die Schüttstelle infolge eines Verschwenkens des Hilfsrahmens hebt oder senkt, und
daß Einrichtungen vorgesehen sind, um bei dieser Bewegung nach oben oder nach unten eine Ausrichtungsänderung der Hebevorrichtung (20) bezüglich der Vertikalen zu begrenzen.

2. Vorrichtung nach Anspruch 1, dadurch gekennzeichnet, daß die Hebevorrichtung mit dem Hilfsrahmen (13) durch ein in Nähe der Schüttstelle gelegenes Gelenk (21) mit horizontaler Querachse und mit dem Hauptrahmen durch eine Stange (23) verbunden ist, die mit dem Hauptrahmen und mit der Hebevorrichtung durch Gelenke (24, 25) mit horizontaler Querachse verbunden ist.

3. Vorrichtung nach Anspruch 2, dadurch gekennzeichnet, daß die mittlere Neigung der Stange (23) etwa gleich der mittleren Neigung einer Ebene ist, die durch die den Hilfsrahmen mit dem Hauptrahmen und mit der Hebevorrichtung verbindenden Gelenke (14, 21) gelegt ist.

4. Vorrichtung nach Anspruch 2 oder 3, dadurch gekennzeichnet, daß die den Hauptrahmen, den Hilfsrahmen, die Hebevorrichtung und die Stange verbindenden Gelenke alle direkt an Trägern oder Ständern eines Rahmens oder der Hebevorrichtung montiert sind.
